# EUROPEAN PATENT SPECIFICATION

(11) **EP 3 457 482 B1**
(45) Date of publication and mention of the grant of the patent: **20.12.2023**
(21) Application number: 17795923.6
(22) Date of filing: 20.04.2017
(51) Int. Cl.: H01M 10/052, H01M 4/13, H01M 10/0569

(54) **NON-AQUEOUS SECONDARY BATTERY**
WASSERFREIE SEKUNDÄRBATTERIE
BATTERIE RECHARGEABLE À ÉLECTROLYTE NON AQUEUX

(30) Priority: 10.05.2016 JP 2016094656
(43) Date of publication of application: 20.03.2019
(73) Proprietor: Zeon Corporation, Tokyo 100-8246 (JP)
(72) Inventor: AKIIKE, Junnosuke, Tokyo 100-8246 (JP); MURASE, Tomoya, Tokyo 100-8246 (JP)
(74) Representative: Maiwald GmbH
(86) International application number: PCT/JP2017/015940
(87) International publication number: WO 2017/195562

(56) References cited:
- EP-A2- 1 758 199
- WO-A1-2012/011555
- WO-A1-2012/057324
- JP-A- 2010 539 670

## Description

### TECHNICAL FIELD

The present disclosure relates to a non-aqueous secondary battery.

### BACKGROUND

Non-aqueous secondary batteries (hereinafter, also referred to simply as "secondary batteries"), such as lithium ion secondary batteries, have characteristics such as compact size, light weight, high energy density, and the ability to be repeatedly charged and discharged, and are used in a wide variety of applications. A secondary battery generally includes battery members such as a positive electrode, a negative electrode, and a separator that isolates the positive electrode and the negative electrode from one another and prevents short circuiting between the positive and negative electrodes.

In recent years, battery members provided with a porous membrane containing non-conductive particles and a binder have been used in secondary batteries as battery members having improved heat resistance and strength. Used examples of porous membrane-containing electrodes include an electrode that is obtained by further forming a porous membrane on an electrode substrate including a current collector and an electrode mixed material layer provided thereon. Moreover, used examples of porous membrane-containing separators include a separator obtained by forming a porous membrane on a separator substrate and a separator composed by only a porous membrane.

There has been much activity related to the enhancement of porous membranes in recent years with the aim of achieving even higher secondary battery performance. For example, PTL 1 proposes a technique for improving high-temperature cycle characteristics of a secondary battery using a porous membrane that contains non-conductive particles and a polymer serving as a binder. The polymer includes a nitrile group, a hydrophilic group, and a linear alkylene structural unit having a carbon number of 4 or more in a single molecule and has a nitrile group percentage content of 1 mass% to 25 mass% and an iodine value of at least 0 mg/100 mg and not more than 30 mg/100 mg.

### CITATION LIST

### Patent Literature

PTL 1: WO 2012/057324 A1

### SUMMARY

### (Technical Problem)

However, there is room for improvement over the technique of PTL 1 in terms of further improving secondary battery high-temperature cycle characteristics and causing a secondary battery to display excellent low-temperature output characteristics.

Accordingly, an objective of the present disclosure is to provide an advantageous solution for the points set forth above.

### (Solution to Problem)

The inventors conducted diligent investigation with the aim of solving the problems set forth above. The inventors discovered that high-temperature cycle characteristics and low-temperature output characteristics of a secondary battery can be improved through combined use of a porous membrane containing a polymer that has a nitrile group and includes an alkylene structural unit and an electrolyte solution in which a propionic acid compound constitutes a specific proportion of a non-aqueous solvent, and in this manner completed the present disclosure.

Specifically, the present disclosure aims to advantageously solve the problems set forth above by disclosing a non-aqueous secondary battery comprising a positive electrode, a negative electrode, a separator, and an electrolyte solution, wherein at least one of the positive electrode, the negative electrode, and the separator includes a porous membrane, the porous membrane contains non-conductive particles and a polymer that has a nitrile group and includes an alkylene structural unit, the electrolyte solution contains a non-aqueous solvent and a lithium salt, and a propionic acid compound constitutes at least 50 volume% and not more than 90 volume% of the non-aqueous solvent, and the non-aqueous solvent is composed only of the propionic acid compound and a carbonate. A secondary battery that includes: a porous membrane containing non-conductive particles and a polymer that has a nitrile group and includes an alkylene structural unit; and an electrolyte solution in which a propionic acid compound constitutes a specific proportion of a non-aqueous solvent as set forth above has excellent high-temperature cycle characteristics and low-temperature output characteristics.

The term "propionic acid compound" as used in the present disclosure refers to propionic acid and derivatives thereof.

Moreover, the term "volume%" as used in the present disclosure refers to volume% at a temperature of 25°C.

In the presently disclosed non-aqueous secondary battery, the polymer preferably has a nitrile group percentage content of at least 5 mass% and not more than 40 mass%. When the proportion in which the polymer in the porous membrane contains nitrile groups is at least 5 mass% and not more than 40 mass%, elution of the polymer into the electrolyte solution can be inhibited, strength of the polymer can be increased, and adhesiveness of the porous membrane after immersion in the electrolyte solution can be improved. Consequently, cell swelling of the secondary battery can be inhibited while further improving high-temperature cycle characteristics and low-temperature output characteristics of the secondary battery.

The "nitrile group percentage content" of a polymer referred to in the present disclosure can be measured by a method described in the EXAMPLES section of the present specification.

In the presently disclosed non-aqueous secondary battery, the polymer preferably has a weight average molecular weight of at least 50,000 and not more than 500,000. When the weight average molecular weight of the polymer is at least 50,000 and not more than 500,000, uneven distribution of the non-conductive particles in the porous membrane can be inhibited, strength of the polymer can be increased, and adhesiveness of the porous membrane after immersion in the electrolyte solution can be improved. Consequently, cell swelling of the secondary battery can be inhibited while further improving high-temperature cycle characteristics and low-temperature output characteristics of the secondary battery.

The "weight average molecular weight" of a polymer referred to in the present disclosure can be measured by a method described in the EXAMPLES section of the present specification.

In the presently disclosed non-aqueous secondary battery, the polymer preferably has an iodine value of at least 0 mg/100 mg and not more than 70 mg/100 mg. When the iodine value of the polymer is at least 0 mg/100 mg and not more than 70 mg/100 mg, cell swelling of the secondary battery can be inhibited, and high-temperature cycle characteristics and low-temperature output characteristics of the secondary battery can be further improved.

The "iodine value" of a polymer referred to in the present disclosure can be measured by a method described in the EXAMPLES section of the present specification.

In the presently disclosed non-aqueous secondary battery, the propionic acid compound is preferably a propionic acid ester. Adhesiveness of the porous membrane after immersion in the electrolyte solution can be increased by using an electrolyte solution that contains a propionic acid ester as a non-aqueous solvent. Moreover, cell swelling of the secondary battery can be inhibited, and high-temperature cycle characteristics and low-temperature output characteristics of the secondary battery can be further improved.

In the presently disclosed non-aqueous secondary battery, the propionic acid ester preferably includes at least one selected from the group consisting of ethyl propionate, n-propyl propionate, and isopropyl propionate. Low-temperature output characteristics of the secondary battery can be even further improved through use of an electrolyte solution that contains at least one of ethyl propionate, n-propyl propionate, and isopropyl propionate as a non-aqueous solvent.

### (Advantageous Effect)

According to the present disclosure, it is possible to provide a non-aqueous secondary battery having excellent high-temperature cycle characteristics and low-temperature output characteristics.

### DETAILED DESCRIPTION

The following provides a detailed description of embodiments of the present disclosure.

### (Non-aqueous secondary battery)

A presently disclosed non-aqueous secondary battery includes a positive electrode, a negative electrode, a separator, and an electrolyte solution. In the presently disclosed non-aqueous secondary battery, at least one battery member among the positive electrode, the negative electrode, and the separator includes a porous membrane, and the porous membrane contains non-conductive particles and a polymer having a nitrile group and including an alkylene structural unit. Moreover, the electrolyte solution in the presently disclosed non-aqueous secondary battery contains a non-aqueous solvent and a lithium salt, and a propionic acid compound constitutes at least 50 volume% and not more than 90 volume% of the non-aqueous solvent.

As a result of a battery member including the porous membrane set forth above being used in combination with the electrolyte solution set forth above in the presently disclosed non-aqueous secondary battery, the non-aqueous secondary battery has excellent high-temperature cycle characteristics and low-temperature output characteristics.

Although it is not clear why the presently disclosed non-aqueous secondary battery has excellent high-temperature cycle characteristics and low-temperature output characteristics, the reason for this is presumed to be as follows.

Specifically, the propionic acid compound contained as a non-aqueous solvent in the electrolyte solution has low viscosity in a low-temperature environment. Consequently, through use of the electrolyte solution containing the propionic acid compound, sufficient conductivity of charge carriers such as lithium ions in the electrolyte solution can be ensured even in a low-temperature environment. Moreover, the polymer having a nitrile group and including an alkylene structural unit has excellent strength and exhibits a certain degree of affinity with the electrolyte solution containing the propionic acid compound while also resisting elution into the electrolyte solution. Consequently, the porous membrane containing the polymer that has a nitrile group and includes an alkylene structural unit enables strong adhesion between battery members in the electrolyte solution containing the propionic acid compound. Accordingly, when a battery member including the porous membrane set forth above is used in combination with the electrolyte solution set forth above, sufficient conductivity of charge carriers can be ensured, battery members can be strongly adhered in the electrolyte solution, and high-temperature cycle characteristics and low-temperature output characteristics of the secondary battery can be improved.

### <Porous membrane>

The porous membrane used in the presently disclosed secondary battery contains at least non-conductive particles and a polymer having a nitrile group and including an alkylene structural unit, and may optionally contain other components.

### [Non-conductive particles]

The non-conductive particles are particles that can increase heat resistance and strength of the porous membrane. The non-conductive particles are electrochemically stable and are, therefore, present stably in the porous membrane in the environment of use of the secondary battery.

### -Type of non-conductive particles-

Various types of inorganic fine particles and organic fine particles can be used as the non-conductive particles.

Examples of inorganic fine particles that may be used include particles of oxides such as aluminum oxide (alumina), hydrated aluminum oxide (boehmite (AlOOH)), gibbsite (Al(OH)₃), silicon oxide, magnesium oxide, titanium oxide, BaTiO₂, ZrO, and alumina-silica composite oxide; particles of nitrides such as aluminum nitride and boron nitride; particles of covalent crystals such as silicon and diamond; particles of sparingly soluble ionic crystals such as barium sulfate, calcium fluoride, and barium fluoride; and fine particles of clays such as talc and montmorillonite. These particles may be subjected to element replacement, surface treatment, solid solution treatment, or the like as necessary.

Examples of organic fine particles that may be used include particles of various crosslinked polymers such as crosslinked polymethyl methacrylate, crosslinked polystyrene, crosslinked polydivinylbenzene, crosslinked styrene-divinylbenzene copolymer, polyimide, polyamide, polyamide imide, melamine resin, phenolic resin, and benzoguanamine-formaldehyde condensate, and particles of heat-resistant polymers such as polysulfone, polyacrylonitrile, polyaramid, polyacetal, and thermoplastic polyimide. Moreover, modified products and derivatives of the above examples may be used as the organic fine particles.

Moreover, the non-conductive particles may be particles obtained through surface treatment using a non-conductive material with respect to the surface of a fine powder of a conductive metal, conductive compound, or oxide such as carbon black, graphite, SnO₂, ITO, or metal powder so as to impart a property of electrical insulation.

One of these types of non-conductive particles may be used individually, or two or more of these types of non-conductive particles may be used in combination. Moreover, of these non-conductive particles, alumina particles, boehmite particles, and barium sulfate particles are preferable, and alumina particles are more preferable.

### -Volume average particle diameter of non-conductive particles-

The volume average particle diameter of the non-conductive particles is preferably 5 nm or more, more preferably 10 nm or more, and even more preferably 100 nm or more, and is preferably 10 µm or less, more preferably 5 µm or less, and even more preferably 2 µm or less. A non-conductive particle volume average particle diameter that is within any of the ranges set forth above can facilitate control of the dispersion state of a subsequently described porous membrane composition and enables production of a thin and homogeneous porous membrane. Moreover, this can ensure strength of the porous membrane and inhibit an excessive increase in particle packing fraction of the porous membrane. Consequently, sufficient conductivity of charge carriers such as lithium ions can be ensured and low-temperature output characteristics of the secondary battery can be further improved.

The term "volume average particle diameter" as used in the present disclosure refers to the particle diameter (D50) at which, in a particle diameter distribution (volume basis) measured by laser diffraction, cumulative volume calculated from the small diameter end of the distribution reaches 50%.

### -CV of non-conductive particles-

The coefficient of variation (CV) of the non-conductive particles is preferably 0.5% or more, and is preferably 40% or less, more preferably 30% or less, and even more preferably 20% or less. When the CV of the non-conductive particles is within any of the ranges set forth above, sufficient gaps between the non-conductive particles can be ensured. Consequently, sufficient conductivity of charge carriers such as lithium ions can be ensured and low-temperature output characteristics of the secondary battery can be further improved.

The "CV" referred to in the present disclosure can be calculated based on a particle diameter distribution (volume basis) measured by laser diffraction. Specifically, the aforementioned volume average particle diameter and the particle diameter standard deviation are determined from a particle diameter distribution (volume basis) measured by laser diffraction and then the CV can be calculated from an equation: CV = particle diameter standard deviation/volume average particle diameter × 100.

### [Polymer]

The polymer contained in the porous membrane according to the present disclosure has a nitrile group and includes an alkylene structural unit as a repeating unit in individual molecules thereof. The polymer functions as a binder to prevent detachment of the non-conductive particles and the like from the porous membrane and to adhere battery members to one another.

### -Nitrile group-

The nitrile group percentage content in the polymer when the overall polymer is taken to be 100 mass% is preferably 5 mass% or more, more preferably 9 mass% or more, even more preferably 10 mass% or more, and particularly preferably 13 mass% or more, and is preferably 40 mass% or less, more preferably 30 mass% or less, and even more preferably 20 mass% or less. Strength of the polymer can be increased and adhesiveness of the porous membrane after immersion in the electrolyte solution can be improved when the nitrile group percentage content in the polymer is at least any of the lower limits set forth above. Consequently, cell swelling of the secondary battery can be inhibited and high-temperature cycle characteristics of the secondary battery can be further improved. On the other hand, elution of the polymer into the electrolyte solution can be inhibited, and high-temperature cycle characteristics and low-temperature output characteristics of the secondary battery can be further improved when the nitrile group percentage content in the polymer is not more than any of the upper limits set forth above.

No specific limitations are placed on the method by which a nitrile group is introduced into the polymer. For example, it is preferable that a nitrile group-containing monomer is used as a monomer in production of the polymer. Through use of a nitrile group-containing monomer as a monomer, a polymer including a nitrile group-containing monomer unit as a repeating unit can be produced.

In the present disclosure, when a polymer is said to "include a monomer unit", this means that "a repeating unit derived from that monomer is included in a polymer obtained using that monomer".

Examples of nitrile group-containing monomers that can form a nitrile group-containing monomer unit include α,β-ethylenically unsaturated nitrile monomers. No specific limitations are placed on such an α,β-ethylenically unsaturated nitrile monomer other than being an α,β-ethylenically unsaturated compound that has a nitrile group. Examples include acrylonitrile; α-halogenoacrylonitriles such as α-chloroacrylonitrile and α-bromoacrylonitrile; and α-alkylacrylonitriles such as methacrylonitrile and α-ethylacrylonitrile. Of these nitrile group-containing monomers, acrylonitrile and methacrylonitrile are preferable, and acrylonitrile is more preferable. One of these nitrile group-containing monomers may be used individually, or two or more of these nitrile group-containing monomers may be used in combination.

The proportion in which a nitrile group-containing monomer unit is included in the polymer when all repeating units (total of structural units and monomer units) in the polymer are taken to be 100 mass% is preferably 10 mass% or more, more preferably 15 mass% or more, even more preferably 20 mass% or more, and particularly preferably 30 mass% or more, and is preferably 65 mass% or less, more preferably 55 mass% or less, and even more preferably 45 mass% or less. Strength of the polymer can be increased and adhesiveness of the porous membrane after immersion in the electrolyte solution can be improved when the proportion in which the nitrile group-containing monomer unit is included in the polymer is at least any of the lower limits set forth above. Consequently, cell swelling of the secondary battery can be inhibited and high-temperature cycle characteristics of the secondary battery can be further improved. On the other hand, elution of the polymer into the electrolyte solution can be inhibited, and high-temperature cycle characteristics and low-temperature output characteristics of the secondary battery can be further improved when the proportion in which the nitrile group-containing monomer unit is included in the polymer is not more than any of the upper limits set forth above.

### -Alkylene structural unit-

The alkylene structural unit is a repeating unit composed only of an alkylene structure represented by a general formula: -CₙH₂ₙ- (n is an integer of 2 or more).

The alkylene structural unit may be linear or branched but is preferably linear from a viewpoint of further improving high-temperature cycle characteristics and low-temperature output characteristics of the secondary battery. In other words, the alkylene structural unit is preferably a linear alkylene structural unit. The carbon number of the alkylene structural unit is preferably 4 or more (i.e., n in the preceding general formula is preferably an integer of 4 or more) from a viewpoint of further improving high-temperature cycle characteristics and low-temperature output characteristics of the secondary battery.

The method by which the alkylene structural unit is introduced into the polymer is not specifically limited and may, for example, be a method described below in (1) or (2).
(1) A method involving preparing a polymer including a conjugated diene monomer unit from a monomer composition containing a conjugated diene monomer and hydrogenating the resultant polymer in order to convert the conjugated diene monomer unit to an alkylene structural unit
(2) A method involving preparing a polymer from a monomer composition containing a 1-olefin monomer

Of these methods, method (1) is preferable in terms of ease of production of the polymer.

Examples of conjugated diene monomers that may be used include 1,3-butadiene, isoprene, 2,3-dimethyl-1,3-butadiene, 2-ethyl-1,3-butadiene, and 1,3-pentadiene. Of these conjugated diene monomers, 1,3-butadiene is preferable. In other words, the alkylene structural unit is preferably a structural unit obtained through hydrogenation of a conjugated diene monomer unit (i.e., is preferably a hydrogenated conjugated diene unit), and is more preferably a structural unit obtained through hydrogenation of a 1,3-butadiene unit (i.e., is more preferably a hydrogenated 1,3-butadiene unit).

Examples of 1-olefin monomers that may be used include ethylene, propylene, 1-butene, and 1-hexene.

One of these conjugated diene monomers or 1-olefin monomers may be used individually, or two or more of these monomers may be used in combination.

The proportion in which the alkylene structural unit is included in the polymer when all repeating units (total of structural units and monomer units) in the polymer are taken to be 100 mass% is preferably 40 mass% or more, and more preferably 45 mass% or more, and is preferably 85 mass% or less, and more preferably 75 mass% or less. Elution of the polymer into the electrolyte solution can be inhibited, and high-temperature cycle characteristics and low-temperature output characteristics of the secondary battery can be further improved when the proportion in which the alkylene structural unit is included in the polymer is at least any of the lower limits set forth above. On the other hand, strength of the polymer can be increased and adhesiveness of the porous membrane after immersion in the electrolyte solution can be improved when the proportion in which the alkylene structural unit is included in the polymer is not more than any of the upper limits set forth above. Consequently, cell swelling of the secondary battery can be inhibited and high-temperature cycle characteristics of the secondary battery can be further improved.

### -Other repeating units-

The polymer may include repeating units other than the nitrile group-containing monomer unit and the alkylene structural unit set forth above. Examples of repeating units other than the nitrile group-containing monomer unit and the alkylene structural unit include, but are not specifically limited to, a (meth)acrylic acid ester monomer unit, a hydrophilic group-containing monomer unit, and a conjugated diene monomer unit that remains without being hydrogenated in the hydrogenation mentioned above. One of these other repeating units may be used individually, or two or more of these other repeating units may be used in combination. In the present disclosure, "(meth)acryl" is used to indicate "acryl" and/or "methacryl".

Examples of (meth)acrylic acid ester monomers that can form a (meth)acrylic acid ester monomer unit include acrylic acid alkyl esters such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate.

Examples of hydrophilic group-containing monomers that can form a hydrophilic group-containing monomer unit include polymerizable monomers having a hydrophilic group. Specific examples of hydrophilic group-containing monomers include carboxy group-containing monomers, sulfo group-containing monomers, phosphate group-containing monomers, and hydroxy group-containing monomers.

Examples of carboxy group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of monocarboxylic acid derivatives include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of dicarboxylic acids include maleic acid, fumaric acid, and itaconic acid.

Examples of dicarboxylic acid derivatives include methylmaleic acid, dimethylmaleic acid, phenylmaleic acid, chloromaleic acid, dichloromaleic acid, fluoromaleic acid, and maleic acid esters such as methyl allyl maleate, diphenyl maleate, nonyl maleate, decyl maleate, dodecyl maleate, octadecyl maleate, and fluoroalkyl maleate.

Examples of acid anhydrides of dicarboxylic acids include maleic anhydride, acrylic anhydride, methyl maleic anhydride, and dimethyl maleic anhydride.

Furthermore, an acid anhydride that produces a carboxy group upon hydrolysis can also be used as a carboxy group-containing monomer.

Other examples include monoesters and diesters of α,β-ethylenically unsaturated polybasic carboxylic acids such as monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, and dibutyl itaconate.

Examples of sulfo group-containing monomers include vinyl sulfonic acid, methyl vinyl sulfonic acid, (meth)allyl sulfonic acid, (meth)acrylic acid 2-sulfoethyl, 2-acrylamido-2-methylpropane sulfonic acid, and 3-allyloxy-2-hydroxypropane sulfonic acid.

In the present disclosure, "(meth)allyl" is used to indicate "allyl" and/or "methallyl".

Examples of phosphate group-containing monomers include 2-(meth)acryloyloxyethyl phosphate, methyl-2-(meth)acryloyloxyethyl phosphate, and ethyl-(meth)acryloyloxyethyl phosphate.

In the present disclosure, "(meth)acryloyl" is used to indicate "acryloyl" and/or "methacryloyl".

Examples of hydroxy group-containing monomers include ethylenically unsaturated alcohols such as (meth)allyl alcohol, 3-buten-1-ol, and 5-hexen-1-ol; alkanol esters of ethylenically unsaturated carboxylic acids such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of (meth)acrylic acid and polyalkylene glycol represented by a general formula CH₂=CR¹-COO-(C_{q}H_{2q}O)ₚ-H (where p represents an integer of 2 to 9, q represents an integer of 2 to 4, and R¹ represents hydrogen or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether.

Although no specific limitations are placed on the proportion in which repeating units other than the nitrile group-containing monomer unit and the alkylene structural unit are included in the polymer, when all repeating units (total of structural units and monomer units) in the polymer are taken to be 100 mass%, the proportion is preferably 20 mass% or less, more preferably 15 mass% or less, even more preferably 10 mass% or less, and particularly preferably 2 mass% or less.

### -Production method of polymer-

Although no specific limitations are placed on the method by which the polymer is produced, the polymer can be produced by, for example, polymerizing a monomer composition containing the monomers set forth above and then optionally performing hydrogenation.

In the present disclosure, the percentage content of each of the monomers in the monomer composition can be set in accordance with the percentage content of each of the repeating units (monomer units and structural units) in the polymer.

Although the polymerization method is not specifically limited, a method such as solution polymerization, suspension polymerization, bulk polymerization, or emulsion polymerization may be used. A known emulsifier or polymerization initiator may be used in these polymerization methods as necessary.

The method of hydrogenation is not specifically limited and may be a typical method using a catalyst (for example, refer to WO 2012/165120 A1, WO 2013/080989 A1, and JP 2013-8485 A).

### -Properties of polymer-

The weight average molecular weight of the polymer is preferably 50,000 or more, more preferably 55,000 or more, even more preferably 60,000 or more, and particularly preferably 70,000 or more, and is preferably 500,000 or less, more preferably 400,000 or less, and even more preferably 300,000 or less. Strength of the polymer can be increased and adhesiveness of the porous membrane after immersion in the electrolyte solution can be improved when the weight average molecular weight of the polymer is at least any of the lower limits set forth above. Consequently, cell swelling of the secondary battery can be inhibited and high-temperature cycle characteristics of the secondary battery can be further improved. On the other hand, a porous membrane in which the non-conductive particles are favorably dispersed can be obtained when the weight average molecular weight of the polymer is not more than any of the upper limits set forth above. Moreover, low-temperature output characteristics of the secondary battery can be further improved by using the porous membrane in which the non-conductive particles are favorably dispersed.

The iodine value of the polymer is 0 mg/100 mg or more, preferably 2 mg/100 mg or more, and more preferably 5 mg/100 mg or more, and is preferably 70 mg/100 mg or less, more preferably 20 mg/100 mg or less, and even more preferably 10 mg/100 mg or less. Cell swelling of the secondary battery can be inhibited, and high-temperature cycle characteristics and low-temperature output characteristics of the secondary battery can be further improved when the iodine value of the polymer is within any of the ranges set forth above.

### -Content of polymer-

The content of the polymer in the porous membrane per 100 parts by mass of the non-conductive particles is preferably 15 parts by mass or more, and more preferably 17 parts by mass or more, and is preferably 30 parts by mass or less, and more preferably 26 parts by mass or less. Adhesiveness of the porous membrane after immersion in the electrolyte solution can be improved when the content of the polymer is at least any of the lower limits set forth above. Consequently, cell swelling of the secondary battery can be inhibited and high-temperature cycle characteristics of the secondary battery can be further improved. On the other hand, low-temperature output characteristics of the secondary battery can be further improved when the content of the polymer is not more than any of the upper limits set forth above.

### [Other components]

The porous membrane may contain any other components besides the components set forth above. No specific limitations are placed on these other components so long as they do not influence the battery reactions. For example, the porous membrane may contain a binder other than the polymer set forth above. Moreover, additives (dispersants, leveling agents, antioxidants, defoamers, lubricants, pH adjusting agents, etc.) that are added to a porous membrane composition used in formation of the porous membrane may remain in the porous membrane.

### [Formation method of porous membrane]

The porous membrane can be formed by, for example, applying a porous membrane composition onto the surface of an appropriate substrate to form an applied film and subsequently drying the applied film.

### -Porous membrane composition-

The porous membrane composition used in formation of the porous membrane is a composition in which the non-conductive particles set forth above, the polymer set forth above, and other components such as set forth above that may optionally be used are dispersed or dissolved in a dispersion medium.

Although no specific limitations are placed on the dispersion medium of the porous membrane composition, the dispersion medium is preferably an organic solvent. Of organic solvents, acetone, methyl ethyl ketone, and tetrahydrofuran are more preferable from a viewpoint of ensuring coatability of the porous membrane composition and increasing drying efficiency. One dispersion medium may be used individually, or two or more dispersion media may be used in combination.

The mixing ratio of the non-conductive particles, the polymer, and the other components in the porous membrane composition can be set in accordance with the mixing ratio of these components in the desired porous membrane.

The porous membrane composition can be obtained by mixing the non-conductive particles, the polymer, and, optionally, other components in the dispersion medium.

Although no specific limitations are placed on the mixing method and the mixing order of the components set forth above, the mixing is preferably performed using a disperser as a mixer in order to efficiently disperse the components. The disperser is preferably a device that can homogeneously disperse and mix the components. Examples of dispersers that may be used include a media-less disperser, a ball mill, a bead mill, a sand mill, a pigment disperser, a grinding machine, an ultrasonic disperser, a homogenizer, and a planetary mixer.

### -Substrate-

No specific limitations are placed on the substrate onto which the porous membrane composition is applied. For example, the substrate may be a separator substrate in a situation in which the porous membrane is used as a member that constitutes part of a separator or may be an electrode substrate obtained by forming an electrode mixed material layer on a current collector in a situation in which the porous membrane is used as a member that constitutes part of an electrode. In these cases, a battery member (separator or electrode) including the porous membrane can easily be produced by applying the porous membrane composition onto the surface of the separator substrate or electrode substrate (normally the electrode mixed material layer-side) and drying the applied film that is formed.

Alternatively, the porous membrane may be peeled from the substrate for direct use as a separator in the form of a free-standing film. In this case, the substrate may be a releasable substrate. When a releasable substrate is used as the substrate, a porous membrane that can be used as a separator is obtained as a free-standing film by applying the porous membrane composition onto the surface of the releasable substrate, drying the applied film that is formed, and peeling the releasable substrate from the porous membrane.

Any separator substrate may be used without any specific limitations and examples thereof include known separator substrates such as organic separator substrates. An organic separator substrate is a porous member that is made from an organic material. Examples of organic separator substrates that may be used include microporous membranes and non-woven fabric containing a polyolefin resin such as polyethylene or polypropylene, an aromatic polyamide resin, or the like. A microporous membrane or non-woven fabric made from polyethylene is preferable due to having excellent strength. Although the separator substrate may be of any thickness, the thickness is preferably 0.5 µm or more, and more preferably 5 µm or more, and is preferably 40 µm or less, more preferably 30 µm or less, and even more preferably 20 µm or less.

Any electrode substrate (positive/negative electrode substrate) may be used without any specific limitations and examples thereof include electrode substrates in which an electrode mixed material layer is formed on a current collector.

Herein, the current collector, an electrode active material (positive/negative electrode active material) and a binder for an electrode mixed material layer (binder for positive/negative electrode mixed material layer) in the electrode mixed material layer, and the method by which the electrode mixed material layer is formed on the current collector may be known examples thereof such as described, for example, in JP 2013-145763 A.

Any releasable substrate may be used without any specific limitations and known releasable substrates may be used.

### -Application-

No specific limitations are placed on the method by which the porous membrane composition is applied onto the substrate. For example, a method such as doctor blading, reverse roll coating, direct roll coating, gravure coating, extrusion coating, or brush coating may be used.

### -Drying-

The method by which the porous membrane composition on the substrate is dried is not specifically limited and may be a known method. Examples of drying methods that may be used include drying by warm, hot, or low-humidity air, drying in a vacuum, and drying through irradiation with infrared light, an electron beam, or the like. Although no specific limitations are placed on the drying conditions, the drying temperature is preferably 30°C to 150°C, and the drying time is preferably 2 minutes to 30 minutes.

### [Thickness of porous membrane]

The thickness of the porous membrane formed on the substrate is preferably 0.01 µm or more, more preferably 0.1 µm or more, and even more preferably 1 µm or more, and is preferably 20 µm or less, more preferably 10 µm or less, and even more preferably 5 µm or less. A porous membrane thickness that is at least any of the lower limits set forth above can ensure sufficient strength of the porous membrane, whereas a porous membrane thickness that is not more than any of the upper limits set forth above can ensure diffusivity of the electrolyte solution and further improve low-temperature output characteristics of the secondary battery.

### <Positive electrode, negative electrode, and separator>

At least one of the positive electrode, the negative electrode, and the separator used in the presently disclosed secondary battery includes the porous membrane set forth above. Specifically, in the case of a positive electrode or negative electrode including a porous membrane, an electrode obtained by forming a porous membrane on an electrode substrate may be used. Moreover, in the case of a separator including a porous membrane, a separator obtained by forming a porous membrane on a separator substrate or a separator composed by a porous membrane may be used.

Furthermore, in the case of a positive electrode, negative electrode, or separator used in the presently disclosed secondary battery that does not include a porous membrane, an electrode composed by an electrode substrate such as set forth above or a separator composed by a separator substrate such as set forth above may be used without any specific limitations.

It should also be noted that the positive electrode, the negative electrode, and the separator may also include elements (for example, an adhesive layer) other than the electrode substrate (positive/negative electrode substrate), the separator substrate, and the porous membrane so long as the effects of the present disclosure are not significantly lost.

### <Electrolyte solution>

A non-aqueous electrolyte solution obtained by dissolving a supporting electrolyte in a non-aqueous solvent is used as the electrolyte solution according to the present disclosure.

### -Non-aqueous solvent-

At least a propionic acid compound is included as the non-aqueous solvent in the electrolyte solution. The propionic acid compound is preferably a propionic acid ester, and more preferably a propionic acid alkyl ester. Of propionic acid alkyl esters, ethyl propionate, n-propyl propionate, isopropyl propionate, n-butyl propionate, isobutyl propionate, and t-butyl propionate are even more preferable, and ethyl propionate, n-propyl propionate, and isopropyl propionate are particularly preferable from a viewpoint of further improving low-temperature output characteristics of the secondary battery. One propionic acid compound may be used individually, or two or more propionic acid compounds may be used in combination.

The electrolyte solution may also contain non-aqueous solvents other than the propionic acid compound. Examples of non-aqueous solvents other than propionic acid compounds include carbonates such as dimethyl carbonate, ethylene carbonate, diethyl carbonate, propylene carbonate, butylene carbonate, methyl ethyl carbonate, fluoroethylene carbonate, and vinylene carbonate; esters such as γ-butyrolactone and methyl formate; ethers such as 1,2-dimethoxyethane and tetrahydrofuran; and sulfur-containing compounds such as sulfolane and dimethyl sulfoxide. Of these other non-aqueous solvents, carbonates are preferable, and ethylene carbonate, diethyl carbonate, propylene carbonate, and methyl ethyl carbonate are more preferable. One non-aqueous solvent other than the propionic acid compound may be used individually, or two or more non-aqueous solvents other than the propionic acid compound may be used in combination.

The proportion constituted by the propionic acid compound among the non-aqueous solvent in the electrolyte solution (proportion at 25°C) is required to be at least 50 volume% and not more than 90 volume%, is preferably 55 volume% or more, more preferably 60 volume% or more, even more preferably 65 volume% or more, and particularly preferably 70 volume% or more, and is preferably 90 volume% or less, and more preferably 80 volume% or less. Low-temperature output characteristics of the secondary battery deteriorate if the proportion constituted by the propionic acid compound in the non-aqueous solvent is less than the lower limit set forth above. On the other hand, adhesiveness of the porous membrane after immersion in the electrolyte solution can be increased and high-temperature cycle characteristics of the secondary battery can be further improved when the proportion constituted by the propionic acid compound in the non-aqueous solvent is 90 volume% or less. The proportion constituted by the propionic acid compound among the non-aqueous solvent in the electrolyte solution (proportion at 25°C) can be measured by gas chromatography, for example.

The non-aqueous solvent in the electrolyte solution is a non-aqueous solvent composed only of the propionic acid compound and at least one selected from the group consisting of dimethyl carbonate, ethylene carbonate, diethyl carbonate, propylene carbonate, butylene carbonate, methyl ethyl carbonate, fluoroethylene carbonate, vinylene carbonate.

Moreover, from a viewpoint of increasing adhesiveness of the porous membrane after immersion in the electrolyte solution and further improving low-temperature output characteristics and high-temperature cycle characteristics of the secondary battery, the non-aqueous solvent in the electrolyte solution is preferably composed only of the propionic acid compound and a carbonate, is more preferably composed only of the propionic acid compound and at least one selected from the group consisting of dimethyl carbonate, ethylene carbonate, diethyl carbonate, propylene carbonate, butylene carbonate, methyl ethyl carbonate, fluoroethylene carbonate, and vinylene carbonate, and is even more preferably composed only of the propionic acid compound and at least one selected from the group consisting of ethylene carbonate, diethyl carbonate, propylene carbonate, and methyl ethyl carbonate.

### -Supporting electrolyte-

The supporting electrolyte may, for example, be a lithium salt in the case of a lithium ion secondary battery. Examples of lithium salts that may be used include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF₆ and LiBF₄ are preferable because they readily dissolve in a propionic acid compound-containing non-aqueous solvent and exhibit a high degree of dissociation. One supporting electrolyte may be used individually, or two or more supporting electrolytes may be used in combination. In general, lithium ion conductivity tends to increase when a supporting electrolyte having a high degree of dissociation is used. Therefore, lithium ion conductivity can be adjusted through the type of supporting electrolyte that is used.

The concentration of the supporting electrolyte in the electrolyte solution (concentration at 25°C) is preferably 0.4 mol/L or more, and more preferably 0.5 mol/L or more, and is preferably 2.0 mol/L or less, and more preferably 1.5 mol/L or less. Low-temperature output characteristics of the secondary battery can be further improved when the concentration of the supporting electrolyte in the electrolyte solution is at least any of the lower limits set forth above. On the other hand, high-temperature cycle characteristics of the secondary battery can be further improved when the concentration of the supporting electrolyte in the electrolyte solution is not more than any of the upper limits set forth above.

Also note that the electrolyte solution may contain known additives that do not correspond to the non-aqueous solvent and the supporting electrolyte.

### <Production method of non-aqueous secondary battery>

The non-aqueous secondary battery can be produced by, for example, stacking the positive electrode and the negative electrode with the separator interposed between, performing rolling, folding, or the like of the resultant laminate as necessary to place the laminate in a battery container, injecting the electrolyte solution into the battery container, and sealing the battery container. At least one battery member among the positive electrode, the negative electrode, and the separator includes the porous membrane. An expanded metal, an overcurrent prevention element such as a fuse or a PTC element, a lead plate, or the like may be placed in the battery container as required in order to prevent pressure from increasing inside the battery container and prevent overcharging or overdischarging from occurring. The shape of the battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%" and "parts" used to express quantities are by mass, unless otherwise specified.

Moreover, in the case of a polymer that is produced through copolymerization of a plurality of monomers, the proportion constituted by a repeating unit in the polymer that is formed through polymerization of a given monomer is normally, unless otherwise specified, the same as the ratio (charging ratio) of the given monomer among all monomers used in polymerization of the polymer.

In the examples and comparative examples, the following methods were used to measure and evaluate the nitrile group percentage content in a polymer, the weight average molecular weight and iodine value of a polymer, the volume average particle diameter and CV of non-conductive particles, the adhesiveness of a porous membrane after immersion in electrolyte solution, and the high-temperature cycle characteristics, low-temperature output characteristics, and swelling resistance of a secondary battery.

### <Nitrile group percentage content in polymer>

A polymer obtained after coagulation and drying was weighed out in an amount of approximately 1 mg and was wrapped in Pyrofoil (F590 produced by Japan Analytical Industry Co., Ltd.). The wrapped polymer was heated at 590°C for 7 minutes to gasify the polymer, and the resultant gas was measured using a gas chromatograph (GC-14A produced by Shimadzu Corporation). This measurement was performed using a TC-1701 (length: 30 m; internal diameter: 0.25 mm; film thickness: 1.0 µm) produced by GL Sciences Inc. as a column and in a temperature range of 50°C to 200°C with a heating rate of 10°C/min. A data processor (Chromatopac "C-R4A" produced by Shimadzu Corporation) was used to perform data collection and analysis. The nitrile group percentage content (mass%) in the polymer was calculated by determining the peak area attributed to nitrile groups from a thermal decomposition gas chromatogram, and converting the peak area attributed to nitrile groups in the polymer to a proportion of the total value of the peak area attributed to nitrile groups and the peak area attributed to other units (all structures other than nitrile groups).

Note that it is also possible to predict the nitrile group percentage content in an obtained polymer from the molecular weight proportion of nitrile groups among monomers in deciding the charged number of parts of each monomer in production of the polymer. Moreover, it is possible to set the charged number of parts of each monomer based on this prediction such that the nitrile group percentage content becomes the desired value.

### <Weight average molecular weight of polymer>

### (Preparation of measurement sample)

A polymer obtained after coagulation and drying was added to approximately 5 mL of eluent and was slowly dissolved at room temperature to prepare a solution having a solid content concentration of approximately 0.5 g/L. Once dissolution was visually confirmed, the solution was gently passed through a filter (opening size: 0.45 µm) to prepare a measurement sample.

### (Measurement conditions)

The measurement apparatus was as follows.
- Column: TSKgel α-M (7.8 mm I.D. × 30 cm) × 2 (produced by Tosoh Corporation)
- Eluent: Tetrahydrofuran
- Flow rate: 0.5 mL/min
- Sample concentration: Approximately 0.5 g/L (solid content concentration)
- Injection volume: 200 µL
- Column temperature: 40°C
- Detector: RI detector incorporated into high-performance GPC apparatus HLC-8320 GPC (produced by Tosoh Corporation)
- Detector conditions: RI: Pol (+), Res (1.0 s)
- Molecular weight marker: Standard polystyrene kit PStQuick Kit-H (produced by Tosoh Corporation)

### <Iodine value of polymer>

The iodine value of a polymer obtained after coagulation and drying was measured in accordance with JIS K6235(2006).

### <Volume average particle diameter and CV of non-conductive particles>

A particle diameter distribution (volume basis) of non-conductive particles in an obtained dispersion liquid of the non-conductive particles was measured using a laser diffraction particle diameter distribution analyzer (SALD-3100 produced by Shimadzu Corporation). The particle diameter at which cumulative volume calculated from the small diameter end of the measured particle diameter distribution reached 50% was taken to be the volume average particle diameter of the non-conductive particles.

In addition, the particle diameter standard deviation in the measured particle diameter distribution was determined and the CV (= particle diameter standard deviation/volume average particle diameter × 100) was calculated.

### <Adhesiveness of porous membrane after immersion in electrolyte solution>

An obtained lithium ion secondary battery was left at rest for 24 hours in a 25°C environment and was pressed for 2 minutes at 100°C and 1 MPa. Thereafter, the lithium ion secondary battery was disassembled and a laminate of a positive electrode and a separator adhered through a porous membrane was cut out as a long piece of 1 cm × 10 cm to obtain a specimen. The specimen was placed with the surface of the positive electrode underneath and cellophane tape was affixed to the surface of the positive electrode. Tape prescribed by JIS Z1522 was used as the cellophane tape. The cellophane tape was fixed to a horizontal test bed. Thereafter, one end of the separator was pulled in a vertically upward direction at a pulling speed of 50 mm/min and the stress when the separator was peeled off (i.e., the adhesion strength of the positive electrode and the separator) was measured three times.

Separately to this measurement of adhesion strength of the positive electrode and the separator, an obtained lithium ion secondary battery was left at rest for 24 hours in a 25°C environment and was pressed for 2 minutes at 100°C and 1 MPa. Thereafter, the lithium ion secondary battery was disassembled and a laminate of a negative electrode and a separator adhered through a porous membrane was cut out as a long piece of 1 cm × 10 cm to obtain a specimen. The specimen was placed with the surface of the negative electrode underneath and cellophane tape was affixed to the surface of the negative electrode. Tape prescribed by JIS Z1522 was used as the cellophane tape. The cellophane tape was fixed to a horizontal test bed. Thereafter, one end of the separator was pulled in a vertically upward direction at a pulling speed of 50 mm/min and the stress when the separator was peeled off (i.e., the adhesion strength of the negative electrode and the separator) was measured three times.

The average value of the six measurements of stress described above was taken to be the peel strength. A high peel strength indicates that an electrode and a separator are strongly adhered through a porous membrane after immersion in electrolyte solution.
A: Peel strength of 5.0 N/m or more
B: Peel strength of at least 3.0 N/m and less than 5.0 N/m
C: Peel strength of at least 1.0 N/m and less than 3.0 N/m
D: Peel strength of less than 1.0 N/m

### <High-temperature cycle characteristics of secondary battery>

An obtained lithium ion secondary battery was left at rest for 24 hours in a 25°C environment. Thereafter, the lithium ion secondary battery was subjected to a charge/discharge operation of charging to 4.35 V at 0.1C and discharging to 2.75 V at 0.1C in a 25°C environment, and the initial capacity C₀ of the lithium ion secondary battery was measured. In addition, the lithium ion secondary battery was subjected to 1,000 cycles of charging and discharging under the same conditions in a 60°C environment and the capacity C₁ of the lithium ion secondary battery after 1,000 cycles was measured.

The capacity maintenance rate ΔC was calculated in accordance with ΔC = C₁/C₀ × 100(%). A high value for the capacity maintenance rate ΔC indicates that a secondary battery has excellent high-temperature cycle characteristics and long service life.
A: ΔC of 84% or more
B: ΔC of at least 80% and less than 84%
C: ΔC of less than 80%

### <Low-temperature output characteristics of secondary battery>

An obtained lithium ion secondary battery was left at rest for 24 hours in a 25°C environment. Thereafter, the lithium ion secondary battery was subjected to a charge operation for 5 hours at a 0.1C charge rate in a 25°C environment and the voltage V₀ at this time was measured. The lithium ion secondary battery was subsequently subjected to a discharge operation at a 1C discharge rate in a -10°C environment and the voltage V₁ once 15 seconds had passed from the start of discharging was measured. The voltage change ΔV was calculated in accordance with ΔV = V₀ - V₁. A small value for the voltage change ΔV indicates that a secondary battery has excellent low-temperature output characteristics.
A: ΔV of less than 350 mV
B: ΔV of at least 350 mV and less than 500 mV
C: ΔV of 500 mV or more.

### <Swelling resistance of secondary battery>

An obtained lithium ion secondary battery was left at rest for 24 hours in a 25°C environment. Thereafter, the lithium ion secondary battery was subjected to a charge/discharge operation of charging to 4.35 V at 0.1C and discharging to 2.75 V at 0.1C in a 25°C environment, and the cell volume E₀ was measured using a densimeter. In addition, the lithium ion secondary battery was subjected to 1,000 cycles of charging and discharging under the same conditions in a 60°C environment and the cell volume E₁ after 1,000 cycles was measured using the densimeter.

The cell swelling rate ΔE was calculated in accordance with ΔE = E₁/E₀ × 100(%) A low value for the cell swelling rate ΔE indicates that a secondary battery exhibits little cell swelling and has stable shape.
A: ΔE of less than 15%
B: ΔE of at least 15% and less than 20%
C: ΔE of at least 20% and less than 25%
D: ΔE of 25% or more

### (Example 1)

### <Production of polymer>

An autoclave equipped with a stirrer was charged with 240 parts of deionized water, 2.5 parts of sodium alkylbenzenesulfonate as an emulsifier, 36.2 parts of acrylonitrile as a nitrile group-containing monomer, and 0.45 parts of t-dodecyl mercaptan as a chain transfer agent in this order and the inside of the autoclave was purged with nitrogen. Thereafter, 63.8 parts of 1,3-butadiene as a conjugated diene monomer for introducing an alkylene structural unit into the polymer was supplied into the autoclave under pressure, 0.25 parts of ammonium persulfate was added as a polymerization initiator, and a polymerization reaction was carried out at a reaction temperature of 40°C. This yielded a copolymer of acrylonitrile and 1,3-butadiene. Note that the polymerization conversion rate was 85%. The 1,2-addition bonding amount of 1,3-butadiene in the pre-hydrogenation copolymer was determined by NMR measurement.

Deionized water was added to the resultant copolymer to obtain a solution adjusted to a total solid content concentration of 12 mass%. After 400 mL of the obtained solution (total solid content: 48 g) had been fed into an autoclave having a capacity of 1 L and equipped with a stirrer, and dissolved oxygen had been removed from the solution by passing nitrogen gas for 10 minutes, 75 mg of palladium acetate as a hydrogenation reaction catalyst was dissolved in 180 mL of deionized water to which nitric acid had been added in 4 molar equivalents of the palladium (Pd), and the resultant solution was added into the autoclave. After the system has been purged twice with hydrogen gas, the contents of the autoclave were heated to 50°C in a state in which the pressure had been raised to 3 MPa with hydrogen gas and a hydrogenation reaction (first stage hydrogenation reaction) was carried out for 6 hours.

Next, the autoclave was returned to atmospheric pressure, 25 mg of palladium acetate as a hydrogenation reaction catalyst was dissolved in 60 mL of deionized water to which nitric acid had been added in 4 molar equivalents of the Pd, and the resultant solution was added into the autoclave. After the system has been purged twice with hydrogen gas, the contents of the autoclave were heated to 50°C in a state in which the pressure had been raised to 3 MPa with hydrogen gas and a hydrogenation reaction (second stage hydrogenation reaction) was carried out for 6 hours.

Next, the contents of the autoclave were returned to normal temperature and the system was changed to a nitrogen atmosphere. Thereafter, concentrating was performed using an evaporator until a solid content concentration of 40% was reached to thereby yield a water dispersion of a polymer.

The obtained water dispersion of the polymer was dripped into methanol to perform coagulation and then the coagulated material was vacuum dried for 12 hours at a temperature of 60°C to obtain a polymer including nitrile group-containing monomer units (acrylonitrile units) and alkylene structural units (hydrogenated 1,3-butadiene units).

The nitrile group percentage content, weight average molecular weight, and iodine value of the obtained polymer were measured. The proportions of alkylene structural units (hydrogenated 1,3-butadiene units) and conjugated diene monomer units (1,3-butadiene units) in the polymer were calculated from the iodine value of the polymer and the 1,2-addition bonding amount of 1,3-butadiene in the pre-hydrogenation copolymer. The results are shown in Table 1.

### <Production of porous membrane composition>

The polymer obtained as described above and acetone were mixed to obtain a binder composition.

In addition, a pre-dispersion mixture of non-conductive particles was prepared by mixing 100 parts of α-alumina particles produced by the Bayer process (LS-256 produced by Nippon Light Metal Co., Ltd.; primary particle diameter: 0.85 µm; primary particle diameter distribution: 10%) as non-conductive particles, 0.5 parts of cyanoethylated pullulan (cyanoethylation substitution rate: 80%) as a dispersant, and acetone. The amount of acetone was adjusted so that the solid content concentration was 25%.

The pre-dispersion mixture of non-conductive particles obtained as described above was subjected to one pass of dispersing using a media-less disperser (inline mill MKO produced by IKA Japan K.K.) under conditions of a circumferential speed of 10 m/s and a flow rate of 200 L/hr. Thereafter, classification was performed using a classifier (slurry screener produced by ACO) to obtain a dispersion liquid of non-conductive particles. The non-conductive particles in the obtained dispersion liquid of non-conductive particles had a volume average particle diameter of 0.9 µm and CV of 13%.

The binder composition and the dispersion liquid of non-conductive particles were mixed in a stirring vessel such that the amount of the polymer was 20 parts per 100 parts of the non-conductive particles. The resultant mixture was diluted with acetone to obtain a porous membrane composition having a solid content concentration of 20%.

### <Production of separator including porous membrane>

The porous membrane composition obtained as described above was applied onto an organic separator substrate (Celgard 2500 produced by Celgard, LLC.; thickness: 25 µm) made of polypropylene and was dried for 3 minutes at 50°C. This operation was performed on both sides of the separator to obtain a separator including a porous membrane of 3 µm in thickness at both sides thereof.

### <Production of negative electrode>

A 5 MPa pressure vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. These materials were sufficiently stirred and were then heated to 50°C to initiate polymerization. The reaction was terminated by cooling at the point at which the polymerization conversion rate reached 96% to yield a mixture containing a binder (SBR) for a negative electrode mixed material layer. The mixture containing the binder for a negative electrode mixed material layer was adjusted to pH 8 through addition of 5% sodium hydroxide aqueous solution, was subsequently subjected to thermal-vacuum distillation to remove unreacted monomers, and was then cooled to 30°C or lower to yield a water dispersion containing the binder for a negative electrode mixed material layer.

Additionally, 100 parts of artificial graphite (average particle diameter: 15.6 µm), 1 part in terms of solid content of a 2% aqueous solution of a carboxymethyl cellulose sodium salt (MAC350HC produced by Nippon Paper Industries Co., Ltd.) as a thickener, and deionized water were mixed and adjusted to a solid content concentration of 68%, and then mixing thereof was performed for 60 minutes at 25°C. The solid content concentration was then adjusted to 62% with deionized water and a further 15 minutes of mixing was performed at 25°C. Next, 1.5 parts in terms of solid content of the binder for a negative electrode mixed material layer and deionized water were added to the resultant mixture, the final solid content concentration was adjusted to 52%, and mixing was performed for 10 minutes. The resultant mixture was subjected to a defoaming process under reduced pressure to yield a slurry composition for a negative electrode having good fluidity.

The obtained slurry composition for a negative electrode was applied onto copper foil (current collector) of 20 µm in thickness by a comma coater such as to have a film thickness after drying of approximately 150 µm. The applied slurry composition was dried by conveying the copper foil inside a 60°C oven for 2 minutes at a speed of 0.5 m/min. Thereafter, heat treatment was performed for 2 minutes at 120°C to obtain a pre-pressing negative electrode web. The pre-pressing negative electrode web was rolled by roll pressing to obtain a post-pressing negative electrode (one-sided negative electrode) including a negative electrode mixed material layer of 80 µm in thickness.

### <Production of positive electrode>

A slurry composition for a positive electrode was produced by mixing 100 parts of LiCoO₂ having a volume average particle diameter of 12 µm as a positive electrode active material, 2 parts of acetylene black (HS-100 produced by Denki Kagaku Kogyo Kabushiki Kaisha) as a conductive material, 2 parts in terms of solid content of polyvinylidene fluoride (#7208 produced by Kureha Corporation) as a binder for a positive electrode mixed material layer, and N-methylpyrrolidone in an amount such that the total solid content concentration was 70%, and then performing further mixing of these materials using a planetary mixer.

The obtained slurry composition for a positive electrode was applied onto aluminum foil (current collector) of 20 µm in thickness by a comma coater such as to have a film thickness after drying of approximately 150 µm. The applied slurry composition was dried by conveying the aluminum foil inside a 60°C oven for 2 minutes at a speed of 0.5 m/min. Thereafter, heat treatment was performed for 2 minutes at 120°C to obtain a pre-pressing positive electrode web. The pre-pressing positive electrode web was rolled by roll pressing to obtain a post-pressing positive electrode (one-sided positive electrode) including a positive electrode mixed material layer of 80 µm in thickness.

### <Production of lithium ion secondary battery>

The obtained post-pressing positive electrode was cut out as a 49 cm × 5 cm rectangle and was placed with the positive electrode mixed material layer on top. The separator including a porous membrane was cut out to 120 cm × 5.5 cm and was placed on the positive electrode mixed material layer such that the positive electrode was positioned at the longitudinal direction left-hand side of the separator. In addition, the obtained post-pressing negative electrode was cut out as a 50 cm × 5.2 cm rectangle and was placed on the separator such that the surface at the negative electrode mixed material layer-side thereof faced the separator and the negative electrode was positioned at the longitudinal direction right-hand side of the separator. The resultant laminate was wound using a winding machine to obtain a roll. The roll was pressed into a flat form for 8 seconds at 120°C and 0.35 MPa. The flattened roll was packed in an aluminum packing case serving as a battery case and an electrolyte solution (non-aqueous solvent: mixed solvent of ethyl propionate (EP), n-propyl propionate (PP), ethylene carbonate (EC), and propylene carbonate (PC) mixed in a volume ratio (25°C) of EP:PP:EC:PC = 35/35/15/15; supporting electrolyte: LiPF₆ of 1.0 mol/L in concentration) was injected into the aluminum packing case such that no air remained. Next, the aluminum packing case was closed by heat sealing at 150°C to tightly seal an opening of the aluminum packing. Thereafter, the flattened roll that had been packed in the aluminum packing case was pressed for 2 minutes at 100°C and 1.0 MPa to produce a wound lithium ion secondary battery having a capacity of 800 mAh.

The obtained lithium ion secondary battery was used to evaluate adhesiveness of the porous membrane after immersion in the electrolyte solution, and high-temperature cycle characteristics, low-temperature output characteristics, and swelling resistance of the secondary battery. The results are shown in Table 1.

### (Examples 2, 3, and 7)

A polymer, a porous membrane composition, a separator including a porous membrane, a positive electrode, a negative electrode, and a lithium ion secondary battery were produced in the same way as in Example 1 with the exception that in production of the lithium ion secondary battery, the composition of the non-aqueous solvent in the electrolyte solution was changed as shown in Table 1. Various measurements and evaluations were performed in the same way as in Example 1. The results are shown in Table 1.

### (Example 4)

A polymer, a porous membrane composition, a separator including a porous membrane, a positive electrode, a negative electrode, and a lithium ion secondary battery were produced in the same way as in Example 1 with the exception that in production of the polymer, the amount of acrylonitrile was changed to 16.8 parts, the amount of 1,3-butadiene was changed to 80.5 parts, and 2.7 parts of methacrylic acid as a hydrophilic group-containing monomer was added into the stirrer-equipped autoclave at the same time as the acrylonitrile. Various measurements and evaluations were performed in the same way as in Example 1. The results are shown in Table 1.

### (Example 5)

A polymer, a porous membrane composition, a separator including a porous membrane, a positive electrode, a negative electrode, and a lithium ion secondary battery were produced in the same way as in Example 1 with the exception that in production of the polymer, the amount of acrylonitrile was changed to 16.8 parts, the amount of 1,3-butadiene was changed to 71.5 parts, and 2.7 parts of methacrylic acid as a hydrophilic group-containing monomer and 9.0 parts of n-butyl acrylate as a (meth)acrylic acid ester monomer were added into the stirrer-equipped autoclave at the same time as the acrylonitrile. Various measurements and evaluations were performed in the same way as in Example 1. The results are shown in Table 1.

### (Example 6)

A polymer, a porous membrane composition, a separator including a porous membrane, a positive electrode, a negative electrode, and a lithium ion secondary battery were produced in the same way as in Example 1 with the exception that in production of the polymer, the amount of acrylonitrile was changed to 50.0 parts and the amount of 1,3-butadiene was changed to 50.0 parts. Various measurements and evaluations were performed in the same way as in Example 1. The results are shown in Table 1.

### (Examples 8 and 9)

A polymer, a porous membrane composition, a separator including a porous membrane, a positive electrode, a negative electrode, and a lithium ion secondary battery were produced in the same way as in Example 1 with the exception that in production of the polymer, the amount of t-dodecyl mercaptan used as a chain transfer agent was changed to 0.65 parts and 0.1 parts in Examples 8 and 9, respectively. Various measurements and evaluations were performed in the same way as in Example 1. The results are shown in Table 1.

### (Example 10)

A polymer, a porous membrane composition, a separator including a porous membrane, and a positive electrode were produced in the same way as in Example 1. Moreover, a negative electrode including a porous membrane and a lithium ion secondary battery were produced as described below. Various measurements and evaluations were performed in the same way as in Example 1. The results are shown in Table 1.

### <Production of negative electrode including porous membrane>

A pre-pressing negative electrode web was obtained in the same way as in Example 1. The negative electrode web was subsequently rolled by roll pressing to obtain a negative electrode substrate including a negative electrode mixed material layer of 80 µm in thickness. A separate porous membrane composition was produced in the same way as the porous membrane composition used in production of the separator including a porous membrane. The obtained porous membrane composition was applied onto the negative electrode mixed material layer of the negative electrode substrate described above and was dried for 3 minutes at 50°C. In this manner, a negative electrode including a porous membrane of 3 µm in thickness on the negative electrode mixed material layer was obtained.

### <Production of lithium ion secondary battery>

The obtained post-pressing positive electrode was cut out as a 49 cm × 5 cm rectangle and was placed with the positive electrode mixed material layer on top. The separator including a porous membrane was cut out to 120 cm × 5.5 cm and was placed on the positive electrode mixed material layer such that the positive electrode was positioned at the longitudinal direction left-hand side of the separator. In addition, the negative electrode including a porous membrane obtained as described above was cut out as a 50 cm × 5.2 cm rectangle and was placed on the separator such that the surface at the porous membrane-side of the negative electrode faced the separator and the negative electrode was positioned at the longitudinal direction right-hand side of the separator. The obtained laminate was wound by a winding machine to obtain a roll.

A lithium ion secondary battery was produced in the same way as in Example 1 with the exception that the roll obtained as described above was used.

### (Comparative Example 1)

A polymer, a porous membrane composition, a separator including a porous membrane, a positive electrode, a negative electrode, and a lithium ion secondary battery were produced in the same way as in Example 1 with the exception that in production of the lithium ion secondary battery, the composition of the non-aqueous solvent in the electrolyte solution was changed as shown in Table 1. Various measurements and evaluations were performed in the same way as in Example 1. The results are shown in Table 1.

### (Comparative Example 2)

A porous membrane composition, a separator including a porous membrane, a positive electrode, a negative electrode, and a lithium ion secondary battery were produced in the same way as in Example 1 with the exception that a polymer produced as described below was used. Various measurements and evaluations were performed in the same way as in Example 1. The results are shown in Table 1.

### <Production of polymer>

A reactor equipped with a stirrer was charged with 70 parts of deionized water, 0.2 parts of sodium dodecylbenzenesulfonate as an emulsifier, and 0.3 parts of potassium persulfate as a polymerization initiator. The gas phase in the reactor was purged with nitrogen gas and heating was performed to 60°C. A monomer mixture was obtained in a separate vessel by mixing 50 parts of deionized water, 0.5 parts of sodium dodecylbenzenesulfonate as an emulsifier, 15.0 parts of acrylonitrile as a nitrile group-containing monomer, 40.0 parts of n-butyl acrylate and 40.0 parts of ethyl acrylate as (meth)acrylic acid ester monomers, 2.0 parts of glycidyl methacrylate as a crosslinkable monomer, and 3.0 parts of methacrylic acid as a hydrophilic group-containing monomer. The monomer mixture was continuously added to the reactor over 4 hours to carry out polymerization. The reaction was carried out at 60°C while the monomer mixture was being added. After addition of the monomer mixture was completed, a further 3 hours of stirring was performed at 70°C to complete the reaction. The polymerization conversion rate was 99.5% or more. The resultant polymerization reaction liquid was cooled to 25°C and was adjusted to pH 7 through addition of ammonia water. Thereafter, steam was introduced and unreacted monomers were removed to obtain a water dispersion of a polymer.

Next, the water dispersion of the polymer was dripped into methanol to perform coagulation and then the coagulated material was vacuum dried for 12 hours at a temperature of 60°C to obtain the polymer.

The weight average molecular weight and iodine value of the obtained polymer were measured. The results are shown in Table 1.

### (Comparative Example 3)

A polymer, a porous membrane composition, a separator including a porous membrane, a positive electrode, a negative electrode, and a lithium ion secondary battery were produced in the same way as in Comparative Example 2 with the exception that in production of the lithium ion secondary battery, the composition of the non-aqueous solvent in the electrolyte solution was changed as shown in Table 1. Various measurements and evaluations were performed in the same way as in Example 1. The results are shown in Table 1.

**Table 1**

| | | | | | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 |
|---|---|---|---|---|---|---|---|---|---|---|---|---|---|---|---|---|---|
| | Electrolyte solution | Non-aqueous solvent | Propionic acid compounds [volume%] | Ethyl propionate | 35 | 35 | 40 | 35 | 35 | 35 | - | 35 | 35 | 35 | 20 | 35 | 20 |
| | | | | n-Propyl propionate | 35 | 18 | 45 | 35 | 35 | 35 | 35 | 35 | 35 | 35 | 25 | 35 | 25 |
| | | | | n-Butyl propionate | - | - | - | - | - | - | 35 | - | - | - | - | - | - |
| | | | Other solvents [volume%] | Ethylene carbonate | 15 | 15 | 10 | 15 | 15 | 15 | 15 | 15 | 15 | 15 | 25 | 15 | 25 |
| | | | | Propylene carbonate | 15 | 32 | 5 | 15 | 15 | 15 | 15 | 15 | 15 | 15 | 30 | 15 | 30 |
| | | | Proportion constituted by propionic acid conpound(s) in non-aqueous solvent [volume%] | | 70 | 53 | 85 | 70 | 70 | 70 | 70 | 70 | 70 | 70 | 45 | 70 | 45 |
| | | Supporting electrolyte | Type | | LiPF₆ | LiPF₆ | LiPF₆ | LiPF₆ | LiPF₆ | LiPF₆ | LiPF₆ | LiPF₆ | LiPF₆ | LiPF₆ | LiPF₆ | LiPF₆ | LiPF₆ |
| | | | Concentration [mol/L] | | 1.0 | 1.0 | 1.0 | 1.0 | 1.0 | 1.0 | 1.0 | 1.0 | 1.0 | 1.0 | 1.0 | 1.0 | 1.0 |
| | | Battery member including porous membrane | | | Separator | Separator | Separator | Separator | Separator | Separator | Separator | Separator | Separator | Separator Negative electrode | Separator | Separator | Separator |
| | | Non-conductive particles | Type | | Alumina | Alumina | Alumina | Alumina | Alumina | Alumina | Alumina | Alumina | Alumina | Alumina | Alumina | Alumina | Alumina |
| Secondary battery | | | Content [parts by mass] | | 100 | 100 | 100 | 100 | 100 | 100 | 100 | 100 | 100 | 100 | 100 | 100 | 100 |
| | | | Nitrile group percentage content [mass%] | | 17.4 | 17.4 | 17.4 | 7.8 | 7.8 | 23.9 | 17.4 | 17.4 | 17.4 | 17.4 | 17.4 | - | - |
| | | | | Acrylonitrile units | 36.2 | 36.2 | 36.2 | 16.8 | 16.8 | 50 | 36.2 | 36.2 | 36.2 | 36.2 | 36.2 | 15.0 | 15.0 |
| | Porous membrane | | | Hydrogenated 1,3-butadiene units | 62.1 | 62.1 | 62.3 | 77.8 | 68.8 | 48.7 | 62.1 | 62.4 | 61.9 | 62.2 | 62.2 | - | - |
| | | Polymer | | 1,3-Butadiene units (non-hydrogenated) | 1.7 | 1.7 | 1.5 | 2.7 | 2.7 | 1.3 | 1.7 | 1.4 | 1.9 | 1.6 | 1.6 | - | - |
| | | | Composition [mass%] | Methacrylic acid units | - | - | - | 2.7 | 2.7 | - | - | - | - | - | - | 3.0 | 3.0 |
| | | | | n-Butyl acrylate units | - | - | - | - | 9.0 | - | - | - | - | - | - | 40.0 | 40.0 |
| | | | | Ethyl acrylate units | - | - | - | - | - | - | - | - | - | - | - | 40.0 | 40.0 |
| | | | | Glycidyl methacrylate units | - | - | - | - | - | - | - | - | - | - | - | 2.0 | 2.0 |
| | | | Weight average molecular weight [-] | | 250 × 10³ | 250 × 10³ | 250 × 10³ | 250 × 10³ | 250 × 10³ | 250 × 10³ | 250 × 10³ | 55 × 10³ | 380 × 10³ | 250 × 10³ | 250 × 10³ | 250 × 10³ | 250 × 10³ |
| | | | Iodine value [mg/100 mg] | | 8 | 8 | 7 | 13 | 13 | 6 | 8 | 7 | 9 | 8 | 8 | 0 | 0 |
| | | | Content [parts by mass] | | 20 | 20 | 20 | 20 | 20 | 20 | 20 | 20 | 20 | 20 | 20 | 20 | 20 |
| Adhesiveness of porous membrane after immersion in electrolyte solution | | | | | A | B | A | B | B | A | A | B | A | A | C | B | D |
| High-temperature cycle characteristics of secondary battery | | | | | A | B | A | B | B | B | A | B | A | A | C | C | C |
| Low-temperature output characteristics of secondary battery | | | | | A | A | B | A | A | B | B | A | B | B | B | C | C |
| Swelling resistance of secondary battery | | | | | A | B | A | B | B | A | A | B | A | A | C | C | D |

It can be seen from Table 1 that in Examples 1 to 10 in which a battery member that included a porous membrane containing non-conductive particles and a polymer having a nitrile group and including an alkylene structural unit was used in combination with an electrolyte solution in which the proportion constituted by a propionic acid compound among a non-aqueous solvent was at least 50 volume% and not more than 100 volume%, adhesiveness of the porous membrane after immersion in the electrolyte solution was excellent, and secondary battery high-temperature cycle characteristics, low-temperature output characteristics, and swelling resistance were excellent. Moreover, it can be seen from Table 1 that in Comparative Example 1 in which an electrolyte solution in which the proportion constituted by a propionic acid compound among a non-aqueous solvent was less than 50 volume% was used, adhesiveness of the porous membrane after immersion in the electrolyte solution decreased, and secondary battery high-temperature cycle characteristics and swelling resistance deteriorated. Furthermore, it can be seen from Table 1 that in Comparative Example 2 in which a battery member (separator) including a porous membrane containing a polymer that did not include an alkylene structural unit was used, secondary battery high-temperature cycle characteristics, low-temperature output characteristics, and swelling resistance deteriorated. Also, it can be seen from Table 1 that in Comparative Example 3 in which a battery member (separator) including a porous membrane containing a polymer that did not include an alkylene structural unit was used in combination with an electrolyte solution in which the proportion constituted by a propionic acid compound among a non-aqueous solvent was less than 50 volume%, adhesiveness of the porous membrane after immersion in the electrolyte solution decreased, and secondary battery high-temperature cycle characteristics, low-temperature output characteristics, and swelling resistance deteriorated.

### INDUSTRIAL APPLICABILITY

According to the present disclosure, it is possible to provide a non-aqueous secondary battery having excellent high-temperature cycle characteristics and low-temperature output characteristics.

## Claims

1. A non-aqueous lithium ion secondary battery comprising a positive electrode, a negative electrode, a separator, and an electrolyte solution, wherein
at least one of the positive electrode, the negative electrode, and the separator includes a porous membrane,
the porous membrane contains non-conductive particles and a polymer that has a nitrile group and includes an alkylene structural unit,
the electrolyte solution contains a non-aqueous solvent and a lithium salt,
a propionic acid compound constitutes at least 50 volume% and not more than 90 volume% of the non-aqueous solvent, and
the non-aqueous solvent is composed only of the propionic acid compound and a carbonate.

2. The non-aqueous secondary battery according to claim 1, wherein the polymer has a nitrile group percentage content of at least 5 mass% and not more than 40 mass%.

3. The non-aqueous secondary battery according to claim 1 or 2, wherein
the polymer has a weight average molecular weight of at least 50,000 and not more than 500,000.

4. The non-aqueous secondary battery according to any one of claims 1 to 3, wherein
the polymer has an iodine value of at least 0 mg/100 mg and not more than 70 mg/100 mg.

5. The non-aqueous secondary battery according to any one of claims 1 to 4, wherein
the propionic acid compound is a propionic acid ester.

6. The non-aqueous secondary battery according to claim 5, wherein the propionic acid ester includes at least one selected from the group consisting of ethyl propionate, n-propyl propionate, and isopropyl propionate.

## Patentansprüche

1. Eine nichtwässrige Lithiumionen-Sekundärbatterie umfassend eine positive Elektrode, eine negative Elektrode, einen Separator, und eine Elektrolytlösung, wobei
wenigstens eines von der positiven Elektrode, der negativen Elektrode und dem Separator eine poröse Membran umfasst,
wobei die poröse Membran nicht-leitfähige Partikel und ein Polymer, welches eine Nitrilgruppe aufweist und eine Alkylenstruktureinheit umfasst, enthält,
wobei die Elektrolytlösung ein nichtwässriges Lösemittel und ein Lithiumsalz umfasst,
wobei eine Propionsäureverbindung mindestens 50 Volumen% und nicht mehr als 90 Volumen% des nichtwässrigen Lösemittels ausmacht, und
wobei das nichtwässrige Lösemittel nur aus der Propionsäureverbindung und einem Carbonat besteht.

2. Die nichtwässrige Lithiumionen-Sekundärbatterie gemäß Anspruch 1, wobei
das Polymer einen prozentualen Nitrilgruppenanteil von mindestens 5 Gewichts% und nicht mehr als 40 Gewichts% aufweist.

3. Die nichtwässrige Lithiumionen-Sekundärbatterie gemäß Anspruch 1 oder 2, wobei
das Polymer ein gewichtsdurchschnittliches Molekulargewicht von mindestens 50.000 und nicht mehr als 500.000 aufweist.

4. Die nichtwässrige Lithiumionen-Sekundärbatterie gemäß irgendeinem der Ansprüche 1 bis 3, wobei
das Polymer einen Jodwert von mindestens 0 mg/100 mg und nicht mehr als 70 mg/100 mg aufweist.

5. Die nichtwässrige Lithiumionen-Sekundärbatterie gemäß irgendeinem der Ansprüche 1 bis 4, wobei
die Propionsäureverbindung ein Propionsäureester ist.

6. Die nichtwässrige Lithiumionen-Sekundärbatterie gemäß Anspruch 5, wobei
der Propionsäureester wenigstens eines ausgewählt aus der Gruppe bestehend aus Ethylpropionat, n-Propylpropionat und Isopropylpropionat umfasst.

## Revendications

1. Batterie rechargeable lithium-ion non aqueuse comprenant une électrode positive, une électrode négative, un séparateur et une solution d'électrolyte, dans laquelle
au moins l'un parmi l'électrode positive, l'électrode négative et le séparateur comprend une membrane poreuse,
la membrane poreuse contient des particules non conductrices et un polymère qui comporte un groupe nitrile et comprend un motif structural alkylène,
la solution d'électrolyte contient un solvant non aqueux et un sel de lithium,
un composé d'acide propionique constitue au moins 50 % en volume et pas plus de 90 % en volume du solvant non aqueux, et
le solvant non aqueux est composé uniquement du composé d'acide propionique et d'un carbonate.

2. Batterie rechargeable non aqueuse selon la revendication 1, dans laquelle
le polymère a une teneur en pourcentage de groupe nitrile d'au moins 5 % en masse et pas plus de 40 % en masse.

3. Batterie rechargeable non aqueuse selon la revendication 1 ou 2, dans laquelle
le polymère a un poids moléculaire moyen en poids d'au moins 50 000 et pas plus de 500 000.

4. Batterie rechargeable non aqueuse selon l'une quelconque des revendications 1 à 3, dans laquelle
le polymère a un indice d'iode d'au moins 0 mg/100 mg et pas plus de 70 mg/100 mg.

5. Batterie rechargeable non aqueuse selon l'une quelconque des revendications 1 à 4, dans laquelle
le composé d'acide propionique est un ester d'acide propionique.

6. Batterie rechargeable non aqueuse selon la revendication 5, dans laquelle
l'ester d'acide propionique comprend au moins l'un choisi dans le groupe constitué du propionate d'éthyle, du propionate de n-propyle et du propionate d'isopropyle.
